# FASCICULE DE BREVET EUROPEEN

(11) **EP 1 672 309 B1**
(45) Date de publication et mention de la délivrance du brevet: **13.02.2008**
(21) Numéro de dépôt: 04106607.7
(22) Date de dépôt: 15.12.2004
(51) Int. Cl.: G01B 5/012

(54) **Tête de mesure orientable motorisée**
Motorisierter und orientierbarer Messkopf
Motorised and orientable measuring head

(30) Priorité: 01.12.2004 EP 04106226
(43) Date de publication de la demande: 21.06.2006
(73) Titulaire: TESA SA, 1020 Renens (CH)
(72) Inventeur: Rouge, Claude, 1446, Baulmes (CH); Jordil, Pascal, 1612, Ecoteaux (CH)
(74) Mandataire: P&TS Patents & Technology Surveys SA

(56) Documents cités:
- US-A1- 2004 149 057
- US-B1- 6 170 358

## Description

### Domaine technique

La présente invention concerne une tête de mesure orientable pour mesurer des coordonnées tridimensionnelles d'une pièce mécanique et notamment, mais pas uniquement, une tête de mesure orientable destinée à être utilisé sur une machine à mesurer des coordonnées manuelle ou automatique.

### Etat de la technique

Les palpeurs à déclenchement sont des instruments de mesure utilisés par exemple sur des lignes de production de pièces mécaniques, pour la vérification des dimensions ou des surfaces des pièces usinées. Les palpeurs à déclenchement sont aussi utilisés pour capturer la forme tridimensionnelle de pièces complexes, afin par exemple de les reproduire ou de les modéliser.

En général les palpeurs comprennent une tête de mesure, destinée à être fixée sur un bras d'une machine à mesurer et une touche mobile, comprenant une sphère au bout d'une tige allongée et destinée à être amenée en contact avec la pièce à mesurer.

Dans la plupart des applications, les palpeurs à déclenchement sont fixés sur le bras mobile d'une machine dont la position dans l'espace est déterminable précisément à l'aide d'un système de mesure manuel ou automatique, par exemple des encodeurs de position disposés sur les axes de la machine. Le bras mobile est déplacé dans l'espace pour amener la touche de mesure du palpeur en contact avec la pièce ou la surface à mesurer. Lors du contact une force de déflection est alors appliquée sur la touche, la sortant de sa position initiale de repos. Un capteur réagit au moindre déplacement de la touche générant un signal électrique qui est envoyé soit à l'utilisateur, sous forme de signal lumineux, soit au logiciel de contrôle de la machine qui détermine ainsi à l'aide des données du système de mesure les coordonnées du point de contact dans un référentiel donné. Dans ce but on utilise dans l'art antérieur des capteurs électromécaniques ou optiques ou des capteurs de déplacement basés sur des principes différents, par exemple des capteurs comprenant des jauges de contrainte.

Dans le cas d'un palpeur à déclenchement tridimensionnel, la liaison entre la touche et la partie fixe de la tête de mesure est habituellement réalisée selon le principe de la liaison de Boys, soit par exemple par trois goupilles cylindriques reposant sur six sphères de façon à définir six points de contact entre l'organe fixe et la touche. On connaît toute fois aussi des touches bi- et unidimensionnelles.

Lorsque le palpeur est utilisé pour la mesure de pièces de forme complexe, présentant des cavités et des protubérances, il est malaisé ou impossible d'amener la touche en contact avec toute la surface de la pièce sans que la partie fixe de la tête de mesure ou la tige de la touche n'interfèrent avec des éléments de la pièce à mesurer. Pour pallier à cet inconvénient, on connaît des têtes de mesure permettant d'orienter la touche de contact dans une pluralité de directions dans l'espace. En général deux axes de rotation indépendants sont requis pour couvrir l'ensemble des orientations possibles. Un instrument de ce type est décrit dans la demande de brevet européen EP0392660.

L'utilisation de ce type de dispositifs n'est toutefois pas limitée aux touches de contact et on peut aussi les employer avecdes capteurs sans contact, par exemple des caméras vidéo, pour inspecter et contrôler des pièces usinées, par exemple.

De préférence, les axes de rotation sont indexés, dans le sens qu'ils prévoient un nombre suffisamment grand mais fini de positions de repos prédéterminées et exactement reproductibles Cette disposition évite de devoir calibrer à nouveau la machine à mesurer après chaque changement de l'orientation de la touche.

L'indexation des axes de rotation de la touche s'obtient par des surfaces d'indexation qui s'engagent mutuellement et définissent les positions de repos souhaitées, par exemple par une couronne de sphères dans laquelle s'engagent trois goupilles. Un exemple de ce type de mécanisme d'indexation est présenté dans la demande de brevet européen EP1443299 au nom de la demanderesse. Une précision optimale est obtenue lorsque les surfaces d'indexation définissent une liaison isostatique avec six points de contact indépendants dans chacune des positions indexés.

Pour la mesure de pièces complexes, il est souhaitable que la tête de mesure soit motorisée pour orienter la touche de palpage de façon automatique, sur commande du programme de contrôle de la machine à mesurer. A cette fin, la rotation et le verrouillage des axes de la touche sont effectués par des actuateurs électromagnétiques, par exemple des moteurs ou des servomoteurs, qui écartent les surfaces d'indexation et impriment une rotation aux axes.

Une limitation des têtesde mesure connues, et particulièrement des têtes de mesure motorisées, est que les éléments orientables doivent être guidées dans leur rotation, par exemple par des paliers ou par des roulements. Ces organes de guidages, toutefois, représentent des contraintes mécaniques additionnelles par rapport à la liaison isostatique et nuisent à la précision de l'indexation. Pour pallier à cet inconvénient, les têtes de mesure connues adoptent souvent des paliers de petit diamètre, ou ayant des tolérances importantes.

Les forces d'inertie liéesà la masse de la touche de palpage peuvent aussi influencer négativement le fonctionnement de la tête de mesure, notamment si l'on utilise destouches massives et des vitesses de translation et rotation importantes. Dans ces conditions il est important d'avoir des paliers ou des organes de guidage efficaces pour les éléments orientables de la tête de mesure.

En l'absence d'un guidage efficace, la vitesse de rotation des éléments orientables est nécessairement limitée. En outre la trajectoire de la touche de palpage lors de la rotation ne peut pas être déterminée avec précision. Il est donc nécessaire de garder une distance de sécurité important entre la touche de palpage et la pièce à mesurer, ce qui rallonge les trajectoires de la tête et réduit la vitesse de mesure.

Un but de la présente invention est de proposer une tête de mesure exempte des limitations des dispositifs connus, et notamment une tête de mesure dont les éléments orientables sont guidés efficacement, sans nuire à la précision de l'indexation, et dans laquelle la trajectoire de la touche est complètement maîtrisée.

Ces buts sont atteints par le dispositif comprenant la combinaison des caractéristiques qui sont l'objet de la revendication principale, et notamment par une tête de mesure orientable pour orienter une touche de palpage relativement à un appareil de mesure, comprenant :
un élément de support ; un premier élément orientable , pouvant coulisser dans la direction d'un premier axe entre une position verrouillée et une position déverrouillée ; un premier organe de guidage connecté audit élément de support ; un second organe de guidage connecté audit premier élément orientable ; dans lequel lesdits premier et second organes de guidage ne se touchent pas lorsque ledit élément orientable se trouve dans la position verrouillée ; dans lequel ledit premier organe de guidage supporte ledit second organe de guidage de manière à permettre la rotation dudit élément orientable autour dudit axe relativement audit élément de support lorsque ledit élément orientable se trouve dans ladite position déverrouillée.

### Brève description des dessins

La présente invention sera mieux comprise à la lecture de la description donnée à titre d'exemple et illustrée par les figures annexées qui représentent:
La figure 1, une vue d'une tête de mesure motorisé selon l'invention.
La figure 2, une coupe de la tête de mesure de l'invention dans la position verrouillée.
La figure 3, une coupe de la tête de mesure de l'invention dans la position déverrouillée.
La figure 4, un détail du mécanisme de verrouillage/déverrouillage de la tête de mesure de l'invention.
Les figures 5-8, différentes vues de l'actuateur responsable du verrouillage et du déverrouillage selon un aspect de l'invention.
La figure 9, une vue détaillée d'un vilebrequin compris dans l'actuateur des figures 5-8.
Les figures 10 et 11, la position des paliers des éléments orientables de la tête de mesure dans la position verrouillée, respectivement déverrouillée.
Les figures 12 et 13, des détails de la figure 10, respectivement de la figure 11.
Les figures 14 et 15, un autre mode de réalisation de l'invention.

### Modes de réalisation de l'invention

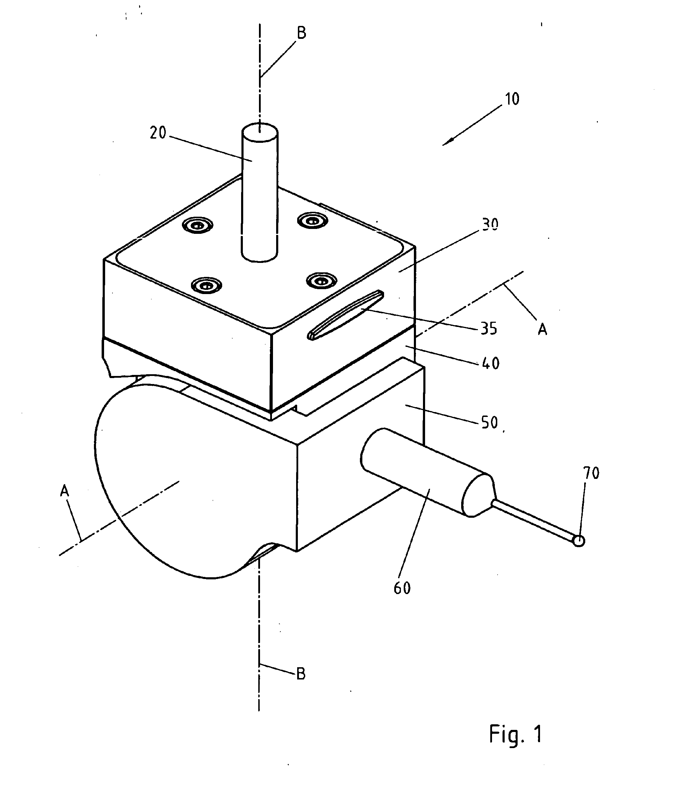

En référence à la figure 1, une tête de mesure orientable 10 selon l'invention comprend un support 30 destiné à être fixé sur le bras d'une machine à mesurer, capable de se mouvoir, par exemple selon trois axes de coordonnées X, Y et Z à l'intérieur d'un volume de mesure. La fixation peut être effectuée, par exemple, par la tige 20, ou par n'importe quel autre moyen de fixation.

Dans la suite on utilisera, par souci de simplicité, la désignation "vertical" pour se référer à l'orientation de l'axe B sur la figure 1. Cette désignation se réfère à l'orientation conventionnelle des figures et aussi à l'orientation dans laquelle le dispositif de l'invention est normalement utilisé et qui coïncide, habituellement, avec la direction de l'axe vertical Z de la machine à mesurer sur laquelle le palpeur est monté. Cependant le palpeur peut être employé avec n'importe quelle orientation dans l'espace.

Un premier élément orientable 40 est fixé au support 30, de manière à pouvoir tourner autour de l'axe vertical B. Le premier élément orientable 40 peut, de préférence, assumer une pluralité de positions indexées, correspondantes à des multiples d'un petit angle prédéterminé, par exemple 10 degrés. De manière connue ces positions indexées sont déterminées par exemple par une liaison isostatique définissant six points d'appui entre des éléments de positionnement dont la position est déterminée avec une grande précision.

Le second élément orientable 50 est libre de tourner autour de l'axe horizontal A, solidaire du premier élément orientable 40. La rotation du second élément orientable 50 autour de l'axe A peut être continue ou indexée, motorisée ou manuelle, comme pour le premier élément orientable 40 ci-dessus.

Une touche de palpage 60 est fixée au second élément orientable 50 et porte, à son extrémité, une sphère 70 destinée à entrer en contact avec la pièce à mesurer. Un mécanisme de détection, non représenté, répond alors au moindre déplacement de la sphère 70, par rapport à la position de repos, avec un signal électrique qui est envoyé soit au voyant lumineux 35, soit au logiciel de contrôle de la machine, par un connecteur non représenté.

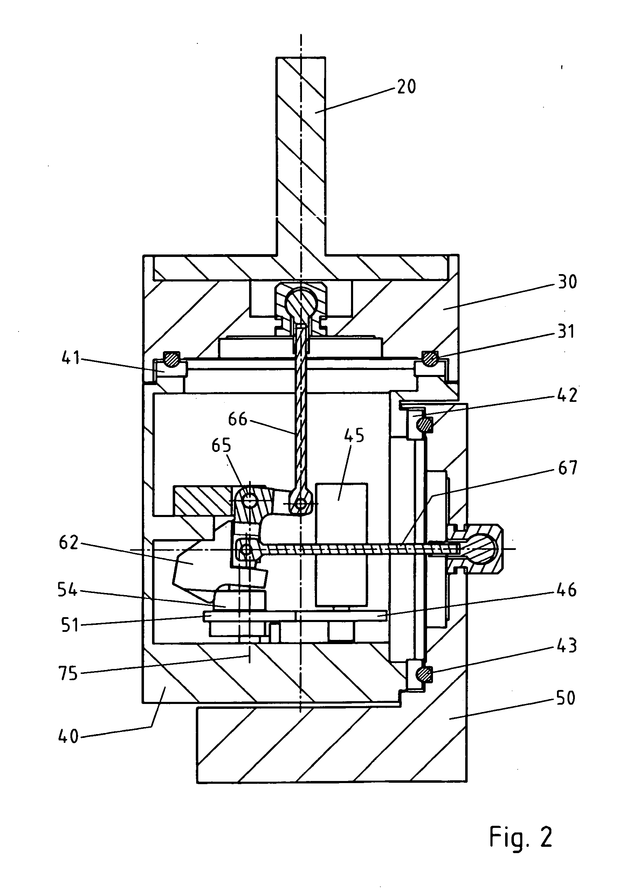

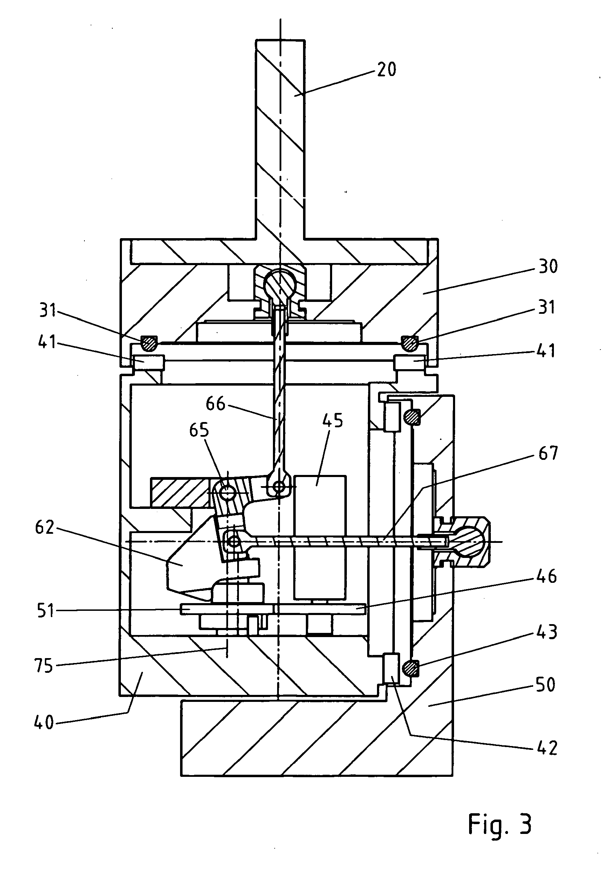

Le mécanisme de verrouillage et déverrouillage des axes selon un aspect de l'invention est maintenant décrit avec référence aux figures 2 et 3.

Le support 30 porte une série de billes 31 disposées selon une circonférence avec un écartement angulaire habituellement constant, par exemple de 10° de manière à définir une série de position indexées habituellement régulièrement espacées. Le premier élément orientable 40 porte, en correspondance des billes 31, trois goupilles 41 écartées de 120° engageables avec les billes 31. En position verrouillée (figure 2), le premier élément orientable 40 est amené, par la traction de la tige 66, contre l'élément fixe 30. Chacune des goupilles 41 touche alors deux billes 31 adjacentes de manière à avoir une liaison isostatique entre l'élément de support 30 et l'élément orientable 40, selon le principe de la liaison de Boys.

De manière équivalente, dans le cadre de la présente invention, il serait possible d'échanger la position des billes et des goupilles, en disposant les premières sur l'élément orientable et les secondes sur l'élément de support. On pourrait aussi remplacer les billes et les goupilles par d'autres éléments de positionnement aptes à définir six points de contact entre l'élément de support 30 et l'élément orientable 40.

Une extrémité de la tige verticale 66 est fixée de manière articulée à l'élément de support 30, tandis que l'autre extrémité de la tige 66 est fixée de manière articulée à un bras du levier 62, pouvant pivoter autour de l'axe 65, fixe par rapport au premier élément orientable 40. Préférablement, la tige 66 est alignée avec l'axe de rotation B.

Dans l'état verrouillé de la figure 2, la tige 66 est en tension et tire vers le haut le premier élément orientable 30 de manière à ce que les goupilles d'indexation 41 s'engagent avec les billes 31 du support 30. Dans cet état, toute rotation autour de l'axe B est impossible et l'élément orientable 40 est bloqué dans une des positions indexées.

La force exercée par la tige 66 est appliquée centralement par rapport aux points de contact entre les billes 31 et le goupilles 41, et est orientée selon l'axe B. De cette manière, on obtient une répartition égale des forces de contact entre les billes 31 et le goupilles 41, pour une précision d'indexation maximale.

Le second élément orientable 50 est aussi maintenu contre le premier élément orientable 40 par la tension de la tige horizontale 67, alignée avec l'axe A. La tige 67 est articulée d'une part par rapport à l'élément orientable 50 et d'autre part par rapport au levier 62.

Un second jeu de billes 43 et de goupilles 42, disposées entre les premier et second éléments orientables permet de bloquer la rotation du second élément orientable 50 dans une position indexée.

Optionnellement, les tiges 66 et 67 comprennent des éléments élastiques non représentés, par exemple des ressorts métalliques, pour assurer une force d'indexation constante entre les goupilles 41, 42 et les billes31, 43. De manière équivalente, des éléments élastiques pourraient être inclus dans le levier 62 ou dans les premier et second éléments orientables.

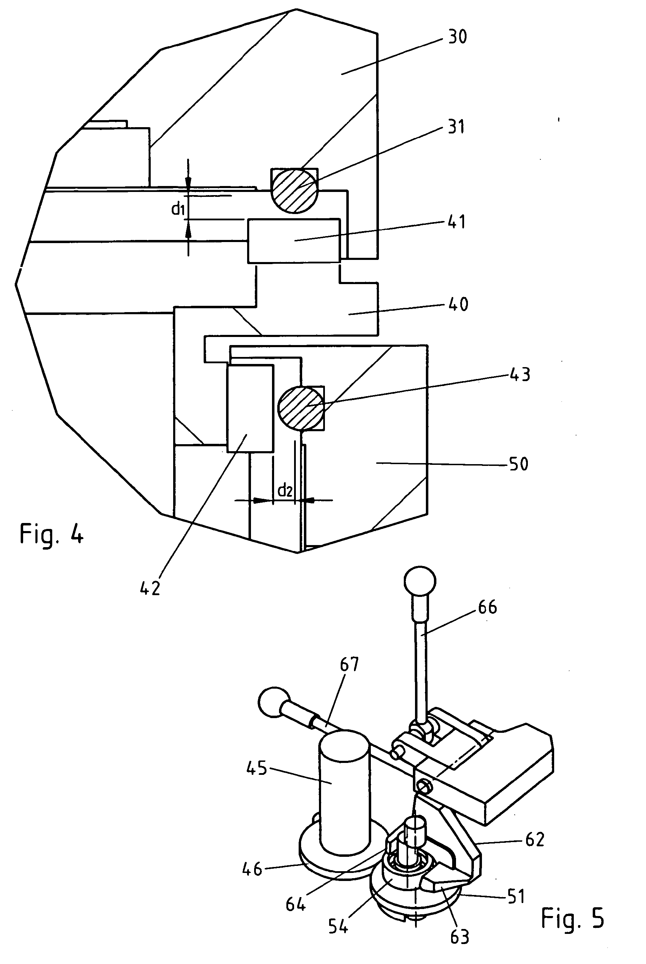

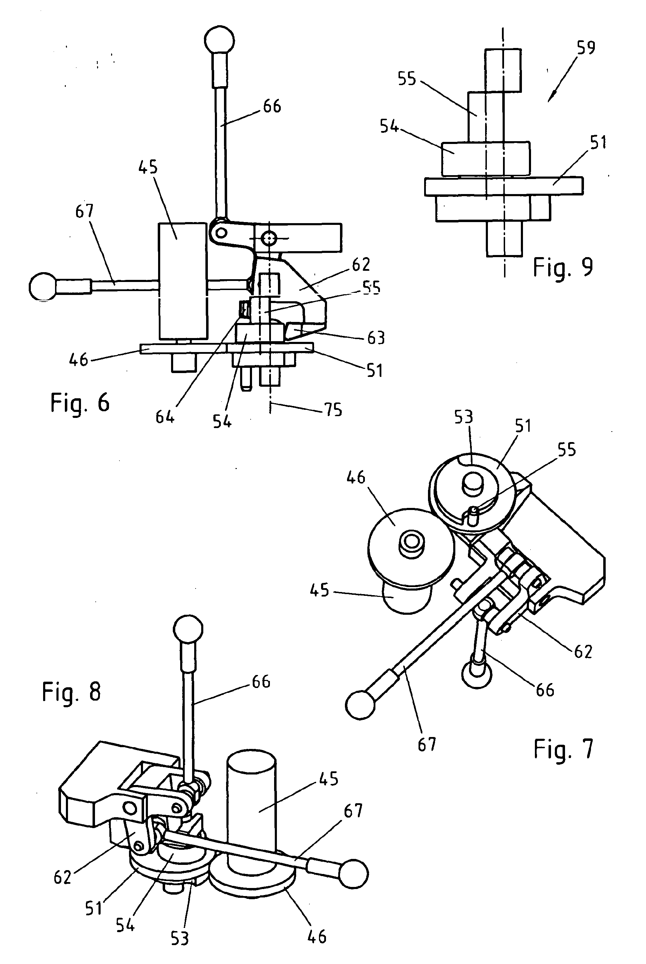

En référence aux figures 5-9, la positon du levier 62 est déterminée par le vilebrequin 59, représenté en détail sur la figure 9, entraîné en rotation autour de l'axe 75 par le moteur électrique 45 et les roues dentées 46, 51. De manière équivalente le vilebrequin 59 pourrait être entraîné directement par un moteur disposé sur l'axe 75 du vilebrequin 59 ou par n'importe quelle transmission mécanique, par exemple par un système de poulies.

Un brasdu levier 62 comporte une fourche dont les deux brins 63 et 64 contactent les deux cotés opposés du maneton 55 du vilebrequin 59, de manière à déplacer le levier 62 de la position verrouillée à la position déverrouillée lorsque le vilebrequin 59 tourne de 180°. Optionnellement, un roulement à billes est interposé entre le maneton 55 et la fourche pour réduire les frottements lors du verrouillage et/ou du déverrouillage. Dans l'exemple illustré sur les figures, un roulement 54 est prévu seulement en correspondance du brin 63 qui transmet la force de verrouillage. En correspondance de l'autre brin 64 de la fourche, responsable du déverrouillage, les efforts requis son plus modestes et on peut employer un simple palier antifriction.

La rotation du vilebrequin 59 autour de l'axe 75 est limitée à un angle de rotation légèrement supérieur à 180° par le secteur 53 et la goupille 55, solidaire du premier élément orientable 30. Les positions de butée de la goupille 55 contre les extrémités du secteur 53 sont disposées de manière à dépasser les points d'équilibre et donc à définir des positions de repos stables correspondant respectivement à l'état verrouillé et à l'état déverrouillé.

Lesfigures 3 et 4 représentent la tête de mesure selon l'invention dans son état déverrouillé. Dans ce cas, le levier 62 est incliné et les tiges 66 et 67 poussent sur l'élément de support 30, respectivement sur le second élément orientable 50, de manière à écarter les éléments d'indexation 31, 41, respectivement 42, 43 d'une distance prédéterminée d1, respectivement d2.

Dans une variante d'exécution, les tiges 66 et 67 pourraient être entraînées par un ensemble pignon/crémaillère.

L'écartement et la fermeture des surfaces d'indexation a lieu grâce à la double action des tiges 66 et 67, qui est indépendante de la direction de la force poids et des forces d'inertie, et sans l'intervention de ressorts ou d'éléments élastiques. Le mécanisme de l'invention peut donc assurer un fonctionnement fiable et rapide quelle que soit l'orientation de la tête de mesure.

Dans la position déverrouillée, la rotation autour des deux axes A et B est assurée par des servomoteurs non représentés, contrôlés par le logiciel de la machine à mesurer, ou par d'autres actuateurs automatiques équivalents.

Le mode de réalisation décrit ici comporte un seul actuateur pour verrouiller et déverrouiller les deux axes A et B simultanément. L'invention comprend toutefois aussi des variantes dans lesquelles chaque axe de rotation est verrouillé et déverrouillé par un actuateur indépendant.

Dans une variante d'exécution, la tête de mesure de l'invention ne comporte qu'un seul axe de rotation, par exemple un axe horizontal A.

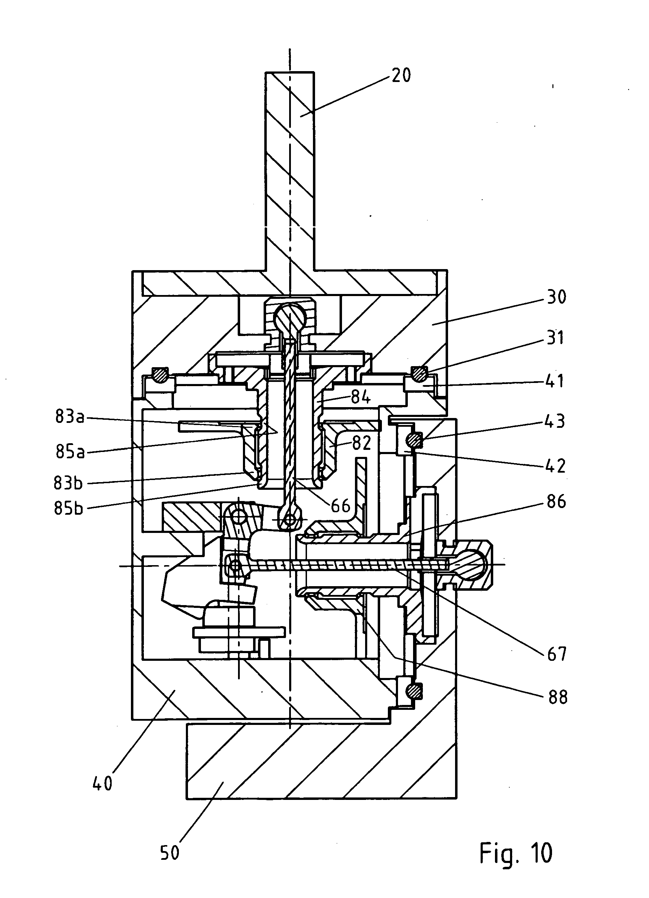

Avec référence à la figure 10, représentant le système de guidage en position verrouillée, le premier élément orientable 40 est pourvu d'une douille de guidage 82 dans lequel s'engage l'arbre 84 solidaire de l'élément de support 30. La surface de l'arbre 84 présente des protubérances (85a, 85b) séparées par des dégagements sue lesquels le diamètre de l'arbre 84 est réduit par rapport au diamètre maximal des protubérances 85a, 85b.

De la même manière la surface intérieure de la douille 82 présente des protubérances 83a, 83b séparées par des dégagements ayant un diamètre supérieur au diamètre interne des protubérances 83a et 83b.

Dans la position verrouillée de la figure 10, les protubérances 83a et 83b font face aux dégagements de l'arbre 84. Il n'y a donc aucun contact entre la douille de guidage 82 et l'arbre fixe 84 qui pourrait perturber la précision de l'indexation.

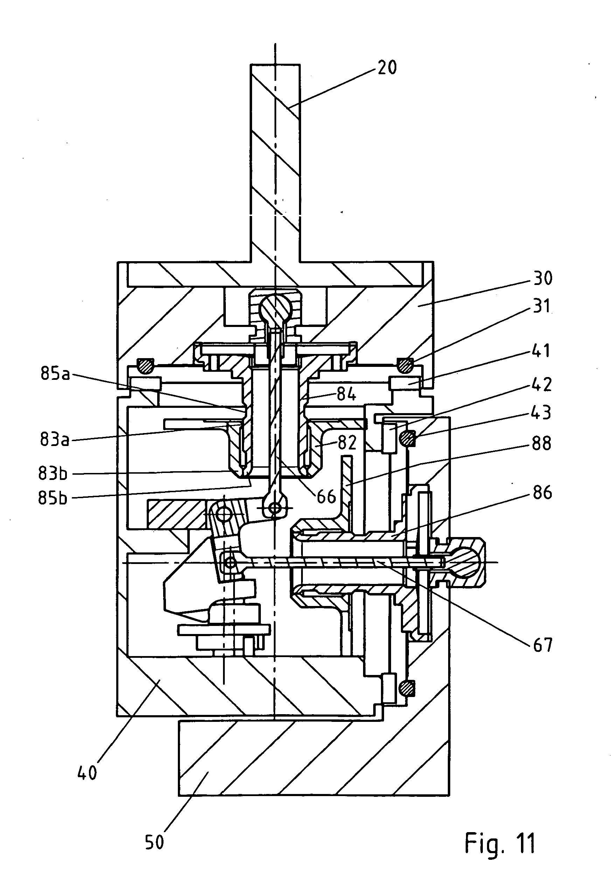

Dans la position déverrouillée de la figure 11, le premier élément orientable 40 est déplacé axialement selon l'axe B de manière à éloigner les billes 31 des goupilles 41. Dans cette position les protubérances 83a et 83b sont juxtaposées aux protubérances 85 a et 85b de manière à supporter la rotation de l'élément orientable 40 autour de l'axe B. Préférablement, la douille 82 et l'arbre 84 comportent chacun deux protubérances écartées selon la direction de l'axe de rotation, pour guider la rotation de manière optimale.

Grâce à l'absence de contact entre les éléments de guidage 82 et 84 en position verrouillée, le diamètre de ces derniers peut être important, et le jeu entre le la douille et l'arbre peut être essentiellement nul, ou négligeable dans la position déverrouillée. De cette manière, la position de la touche de palpage lorsde la rotation est totalement déterminée.

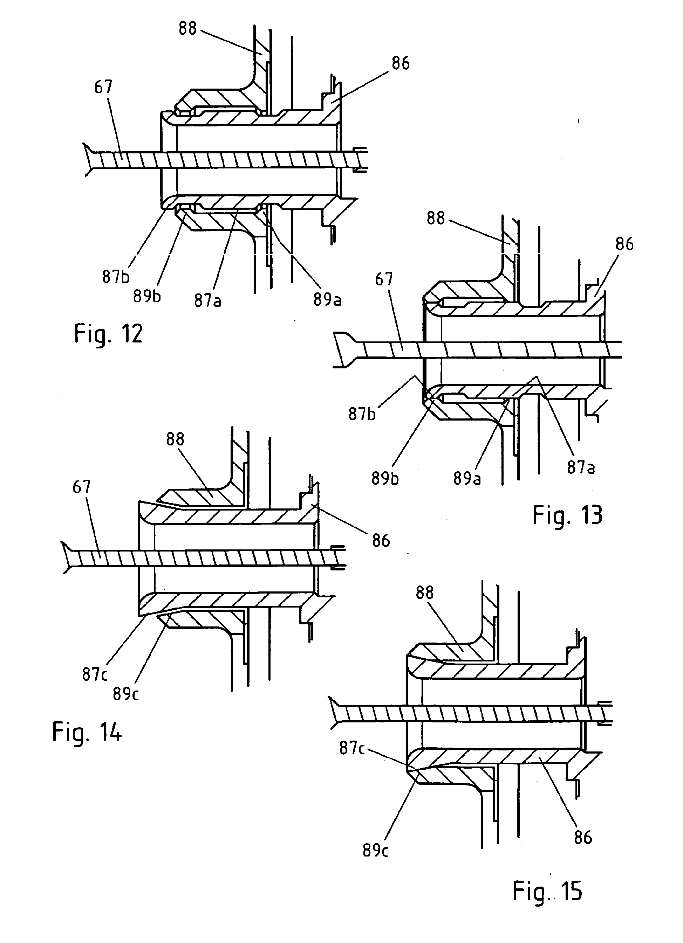

Le second axe de rotation horizontal A est muni d'un mécanisme de guidage visible sur les figures 12 et 13, similaire du celui du premier axe vertical B. La douille de guidage 88 du second axe porte deux protubérances 89a et 89b, tandis que l'arbre 86 comporte les deux protubérances 87a et 87b.

Dans la position verrouillée, visible sur la figure 12, les protubérances 89a, 89b de la douille 88 et les protubérances 87a et 87b de l'arbre 86 sont décalées. De cette manière il n'y a aucun contact entre la douille 88 et l'arbre 86, qui pourrait perturber la précision de l'indexation.

Dans la position déverrouillée de la figure 13, les protubérances 89a, 89b, de la douille 88 et les protubérances 87a et 87b de l'arbre 86 sont juxtaposées et forment deux paliers pour guider la rotation du second élément orientable 50 autour de l'axe A.

Dans une variante de l'invention représentée sur les figures 14 et 15, l'arbre 86 et la douille 88 sont dotésde surfaces de guidage coniques coaxiales 87c et 89c. Dans la disposition verrouillée de la figure 14 il n'y aucun contact entre la douille de guidage 88 et l'arbre 86. Dans la disposition déverrouillée, représentée sur la figure 15, les surfaces coniques 87c et 89c sont en contact et guident la rotation du second élément orientable 50 autour de l'axe A.

## Revendications

1. Tête de mesure orientable (10) pour orienter une touche de palpage (6) relativement à un appareil de mesure, comprenant :
un élément de support (30) ;
un premier élément orientable (40), pouvant coulisser dans la direction d'un premier axe (B) entre une position verrouillée et une position déverrouillée ;
un premier organe de guidage (84) connecté audit élément de support (30) ;
un second organe de guidage (82) connecté audit premier élément orientable (40) ;
dans lequel lesdits premier et second organesde guidage (84, 82) ne se touchent pas lorsque ledit élément orientable (40) se trouve dans la position verrouillée ;
dans lequel ledit premier organe de guidage (84) supporte ledit second organe de guidage (82) de manière à permettre la rotation dudit élément orientable (40) autour dudit axe (B) relativement audit élément de support (30) lorsque ledit élément orientable (40) se trouve dans ladite position déverrouillée.

2. Tête de mesure selon la revendication 1, dans laquelle l'un desdits premier et second organe de guidage (84, 82) est une douille et l'autre est un arbre.

3. Tête de mesure selon la revendication 1 ou 2, dans laquelle lesdits organes de guidage présentent, dans leurs surfaces de support, des protubérances, lesdites protubérances étant décalées lorsque ledit élément orientable est dans la position verrouillée et juxtaposées lorsque ledit élément orientable (40) est dans la position déverrouillée.

4. Tête de mesure selon la revendication 3, dans laquelle lesdits organes de guidage (84, 82) présentent chacun au moins deux protubérances (83a, 83b, 85a, 85b) écartées selon la direction de l'axe (B).

5. Tête de mesure selon l'une des revendications précédentes, comprenant:
une pluralité d'éléments de positionnement mobiles (41) solidaires dudit premier élément orientable (40) ;
une pluralité d'éléments de positionnement fixes (31) solidaires dudit élément de support (30) et engageables avec lesdits éléments de positionnement mobiles(41) pour définir une pluralité d'orientations prédéterminées dudit premier élément orientable (40) relativement audit élément fixe (30).

6. Tête de mesure selon l'une des revendications précédentes, comprenant un actuateur de rotation pour tourner ledit premier élément orientable (40) par rapport à l'élément de support (30) lorsque ledit premier élément orientable se trouve dans la position déverrouillée.

7. Tête de mesure selon l'une des revendications précédentes, dans laquelle l'accouplement entre lesdits premier et second organesde guidage est essentiellement exempt de jeu lorsque ledit premier élément orientable se trouve dans la position déverrouillée.

8. Tête de mesure selon l'une des revendications précédentes comprenant:
un second élément orientable (50) pouvant coulisser, relativement audit premier élément orientable (40), dans la direction d'un second axe (A) entre une position verrouillée et une position déverrouillée ;
un troisième organe de guidage (88) connecté audit premier élément orientable (40) ;
un quatrième organe de guidage (86) connecté audit second élément orientable (50) ;
dans lequel lesdits troisième et quatrième organesde guidage (86, 88) ne se touchent pas lorsque ledit second élément orientable (50) se trouve dans la position verrouillée ;
dans lequel ledit troisième organe de guidage (88) supporte ledit quatrième organe de guidage (86) de manière à permettre la rotation dudit second élément orientable (50) autour dudit second axe (A) relativement audit élément orientable (40) lorsque ledit second élément orientable (50) se trouve dans ladite position déverrouillée.

9. Tête de mesure selon la revendication 8 dans lequel, lesdites premier axe (B) et second axe (A) sont essentiellement orthogonales.

## Claims

1. Orientable measuring head (10) for orienting a probe feeler (6) relatively to a measuring apparatus, including:
a support element (30);
a first re-orientable element (40) capable of sliding in the direction of a first axis (B) between a locked position and un unlocked position;
a first guiding organ (84) connected with said support element (30);
a second guiding organ (82) connected with said first re-orientable element (40);
wherein said first and second guiding organs (84, 82) do not touch when said re-orientable element (40) is in locked position;
wherein said first guiding organ (84) supports said second guiding organ (82) so as to allow said re-orientable element (40) to rotate around said axis (B) relatively to said support element (30) when said orientable element (40) is in said unlocked position.

2. Measuring head according to claim 1, wherein one of said first and second guiding organs (84, 82) is a bushing and the other is a shaft.

3. Measuring head according to claim 1 or 2, wherein said guiding organs have on their supporting surfaces protuberances, said protuberances being shifted in relation to one another when said re-orientable element is in locked position and juxtaposed when said re-orientable element (40) is in unlocked position.

4. Measuring head according to claim 3, wherein said guiding organs (84, 82) each have at least two protuberances (83a, 83b, 85a, 85b) at a distance along the direction of the axis (B).

5. Measuring head according to one of the preceding claims, including:
a plurality of mobile positioning elements (41) solidly united with said first re-orientable element (40);
a plurality of fixed positioning elements (31) solidly united with said support element (30) and capable of engaging with said mobile positioning elements (41) to define a plurality of predetermined orientations of said first re-orientable element (40) relatively to said fixed element (30).

6. Measuring head according to one of the preceding claims, including a rotation actuator for turning said first re-orientable element (40) relatively to said support element (30) when said first re-orientable element is in unlocked position.

7. Measuring head according to one of the preceding claims, wherein the coupling between said first and second guiding organs is essentially free of play when said first re-orientable element is in unlocked position.

8. Measuring head according to one of the preceding claims, including:
a second re-orientable element (50) capable of sliding, relatively to said first re-orientable element (40) in the direction of a second axis (A) between a locked position and an unlocked position;
a third guiding organ (88) connected to said first re-orientable element (40);
a fourth guiding organ (86) connected to said second re-orientable element (50);
wherein said third and fourth guiding organs (86, 88) do not touch when said second re-orientable element (50) is in locked position;
wherein said third guiding organ (88) supports said fourth guiding organ (86) so as to allow said second re-orientable element (50) to rotate around said second axis (A) relatively to said re-orientable element (40) when said second re-orientable element (50) is in said unlocked position.

9. Measuring head according to claim 8, wherein said first axis (B) and second axis (A) are essentially orthogonal.

## Patentansprüche

1. Orientierbarer Messkopf (10) zum Orientieren eines Tasteinsatzes (6) in Bezug auf einen Messapparat, mit:
einem Stützelement (30);
einem ersten orientierbaren Element (40), das in die Richtung einer ersten Achse (B) zwischen einer verriegelten Position und einer entriegelten Position gleiten kann;
einem ersten Führungselement (84), das mit dem besagten Stützelement (30) verbunden ist;
einem zweiten Führungselement (82), das mit dem besagten ersten orienterbaren Element (40) verbunden ist;
worin das besagte erste und das besagte zweite Führungselement (84, 82) sich nicht berühren, wenn sich das besagte orientierbare Element (40) in der verriegelten Position befindet;
worin das besagte erste Führungselement (84) das besagte zweite Führungselement (82) stützt, so dass das Drehen des besagten orientierbaren Elements (40) um die besagte Achse (B) in Bezug auf das besagte Stützelement (30) ermöglicht wird, wenn sich das besagte orientierbare Element (40) in der besagten entriegelten Position befindet.

2. Messkopf gemäss Anspruch 1, worin eines der besagten ersten und zweiten Führungselemente (84, 82) eine Hülse und das andere eine Welle ist.

3. Messkopf gemäss einem der Ansprüche 1 oder 2, worin die besagten Führungselemente, auf ihrer Stützflächen, Protuberanzen aufweisen, wobei die besagten Protuberanzen verschoben sind, wenn das besagte orientierbare Element in der verriegelten Position ist, und übereinander liegen, wenn das orientierbare Element (40) in der entriegelten Position ist.

4. Messkopf gemäss Anspruch 3, worin die besagten Führungselemente (84, 82) jeweils mindestens zwei Protuberanzen (83a, 83b, 85a, 85b) aufweisen, welche in der Richtung der Achse (B) getrennt sind.

5. Messkopf gemäss einem der vorhergehenden Ansprüche, mit:
einer Vielzahl von mobilen Positionierungselementen (41), welche mit dem ersten orientierbaren Element (40) fest verbunden sind;
einer Vielzahl von fixen Positionierungselementen (31), welche mit dem ersten Stützelement (30) fest verbunden sind und die mit den besagten mobilen Positionierungselementen (41) eingreifen können, um eine Vielzahl von vorbestimmten Orientierungen des besagten ersten orientierbaren Elements (40) in Bezug auf das besagte fixe Element (30) zu definieren.

6. Messkopf gemäss einem der vorhergehenden Ansprüche, mit einem Rotor, um das besagte erste orientierbare Element (40) in Beug auf das Stützelement (30) zu drehen, wenn sich das besagte erste orientierbare Element in der entriegelten Position befindet.

7. Messkopf gemäss einem der vorhergehenden Ansprüche, worin die Kupplung zwischen den besagten ersten und zweiten Führungselementen im Wesentlichen spielfrei ist, wenn sich das erste orientierbare Element in der entriegelten Position befindet.

8. Messkopf gemäss einem der vorhergehenden Ansprüche, mit:
einem zweiten orientierbaren Element (50), das in Bezug auf das erste orientierbare Element (40) in die Richtung einer zweiten Achse (A) zwischen einer verriegelten Position und einer entriegelten Position gleiten kann;
einem dritten Führungselement (88), das mit dem besagten ersten orientierbaren Element (40) verbunden ist;
einem vierten Führungselement (86), das mit dem besagten zweiten orienterbaren Element (50) verbunden ist;
worin das besagte dritte und das besagte vierte Führungselement (86, 88) sich nicht berühren, wenn sich das besagte zweite orientierbare Element (50) in der verriegelten Position befindet;
worin das besagte dritte Führungselement (88) das besagte vierte Führungselement (86) stützt, so dass das Drehen des besagten zweiten orientierbaren Elements (50) um die besagte zweite Achse (A) in Bezug auf das besagte orientierbare Element (40) ermöglicht wird, wenn sich das besagte zweite orientierbare Element (50) in der besagten entriegelten Position befindet.

9. Messkopf gemäss Anspruch 8, worin die erste Achse (B) und zweite Achse (A) im Wesentlichen orthogonal sind.
